# EUROPEAN PATENT APPLICATION

(11) **EP 3 822 124 A1**
(43) Date of publication of application: **19.05.2021**
(21) Application number: 19209096.7
(22) Date of filing: 14.11.2019
(51) Int. Cl.: B60R 1/00, B60R 1/072, B60R 1/07

(54) **A CONTROL SYSTEM, METHOD AND A COMPUTER PROGRAM PRODUCT AT A VEHICLE FOR CONTROLLING THE VIEWS OF THE SURROUNDINGS OF THE VEHICLE BY A VEHICLE OCCUPANT**

(71) Applicant: Ningbo Geely Automobile Research & Development Co. Ltd., Hangzhou Bay New District Ningbo 315336 (CN)
(72) Inventor: EKELUND, Johan, 417 16 GÖTEBORG (SE); RAMASAMUDRA SHIVASHANKAR, Nagabhushan, 421 51 GÖTEBORG (SE)
(74) Representative: Zacco Sweden AB

(57) **Abstract**

The disclosure relates to a method for controlling the views of the surroundings of the vehicle (1) by a vehicle occupant, the method comprising: the step of (S3) determining an operational mode of a control switch (5); the step of (S4) controlling a camera view direction of at least a first camera (7a,7b,7c,7d) by the control switch (5), when the control switch (5) is in a first operational mode; and the step of (S5) controlling a mirror view direction of at least a first side mirror (6a,6b) by the control switch (5), when the control switch (5) is in a second operational mode. The disclosure further relates to a control system (100) for controlling the views of the surrounding of the vehicle (1) by a vehicle occupant and a computer program product (500).

## Description

### Technical field

The present disclosure relates to a control system at a vehicle for controlling the views of the surroundings of the vehicle by a vehicle occupant, a method for controlling the views of the surrounding of the vehicle by a vehicle occupant and a computer program product.

### Background art

Vehicles are often equipped with mirrors to obtain views of the surroundings of the vehicle. Traditionally the mirrors are placed on each side of the vehicle, as so called side mirrors, in order to obtain a mirror view of what is behind, or beside, of the vehicle. The direction of each side mirror is typically configured to be controlled by a vehicle occupant using a control switch. It is common that the vehicle occupant can operate the control switch. Recently it has been popular to equip vehicles with a back camera that obtains a camera view of what is behind the vehicle. Typically, the back camera is configured to start providing a camera view, via a display inside of the vehicle, to the vehicle occupant when the vehicle occupant shifts gear to the reverse gear of the vehicle. Sometimes it is possible to change the view of the back camera, by an input selection by the vehicle occupant via a user interface of the vehicle. Sometimes the user interface is a touch sensitive display that is placed somewhere on the dashboard of the vehicle. There are also vehicles equipped with cameras in other directions, in particular vehicles with driving support systems or vehicles that are configured to be self-driving or autonomous.

### Summary

There is sometimes a desire to adjust the view of a back camera. For vehicles with plural cameras in plural directions, there is also a desire to adjust or change the camera views of each camera so that the vehicle occupant is satisfied with the camera view provided by respective camera on the vehicle. Typically, cameras are adjusted via a user interface that is associated with the camera view, for example via a touch sensitive display that is placed somewhere on the dashboard of the vehicle. In the example when a back camera is adjusted, the vehicle may be standing still. However, sometimes it is not desired to have the vehicle occupant to loose attention to what is going on outside of the vehicle too long, for example if the vehicle is moving or driving. There is a need for better and intuitive to control the camera views provided by the cameras of a vehicle. It is an object of the present disclosure to mitigate, alleviate or eliminate one or more of the above-identified deficiencies and disadvantages in the prior art and solve at least the above mentioned problem. According to a first aspect there is provided a control system at a vehicle for controlling the views of the surroundings of the vehicle by a vehicle occupant, the control system comprises: a control switch comprising at least a first directional control key ; at least a first side mirror configured to obtain at least a first mirror view of the surroundings of the vehicle ; at least a first camera configured to obtain at least a first camera view of the surroundings of the vehicle ; and a processing circuitry operatively connected to the control switch, the at least first side mirror and the at least first camera configured to cause the system to: determine an operational mode of the control switch ; control a camera view direction of the at least first camera by the control switch, when the control switch is in a first operational mode; and control a mirror view direction of the at least first side mirror by the control switch, when the control switch is in a second operational mode.

The control switch can hence be used both for controlling a camera view direction of at least the at least first camera in a first operational mode, and the same control switch can also be used for controlling a mirror view direction of the at least first side mirror in a second operational mode. This operation is intuitive for the vehicle occupant that is controlling the views of the surroundings of the vehicle.

According to some embodiments, the control of the camera view direction or the control of the mirror view direction by the control switch comprises an actuation of the at least first directional control key of the control switch by the vehicle occupant.

The same directional control key of the control switch can hence be used both for controlling a camera view direction of the at least first camera in a first operational mode, and the same control switch can also be used for controlling a mirror view direction of the at least first side mirror in a second operational mode. This operation is intuitive for the vehicle occupant that is controlling the views of the surroundings of the vehicle.

According to some embodiments, the processing circuitry is further configured to cause the control system to: determine a press-and-hold actuation of the at least first directional control key of the control switch ; determine a release of actuation of the at least first directional control key of the control switch ; and in a determination that the press-and-hold actuation of the at least first directional control key is followed by the release of actuation of the at least first directional control key at a first predetermined time interval, set the control switch in the at least first operational mode; and in a determination that the press-and-hold actuation of the at least first directional control key is followed by the release of actuation of the at least first directional control key at a second predetermined time interval different from the first predetermined time interval, set the control switch in the second operational mode.

The same directional control key of the control switch can hence be used both for setting the control switch in the first operational mode, activating control of the camera view direction, when the directional control key is pressed and hold a certain amount of time, e.g. less than two seconds. The same directional control key of the control switch can also be used for setting the control switch in the second operational mode, for activating control of the mirror view direction, when the directional control key is pressed and hold a different amount of time, e.g. more than two seconds. The vehicle occupant does hence not need to look at the control switch but can intuitively use touch and feel for activating control of the mirror view direction and for activating control of the camera view direction.

According to some embodiments, wherein the processing circuitry is further configured to, cause the control system to: control any of the camera view direction of the at least a first camera or control the mirror view direction of the at least first side mirror that is located in the same direction on the vehicle relative to a direction indication of the actuated at least first directional control key used for setting the operational mode, by further actuations of any directional control key of the control switch by the vehicle occupant.

The vehicle occupant does hence not need to look at the control switch but can intuitively use touch and feel for activating control of the mirror view direction of a mirror, or a camera view direction of a camera, that is in the same direction as the directional control key of the control switch.

According to some embodiments, the control system further comprises an operation mode switch operatively connected to the processing circuitry configured to set the operational mode of the control switch wherein the processing circuitry is further configured to, cause the control system to: determine an actuation of the operation mode switch by the vehicle occupant; and set the control switch in a first operational mode or in a second operational mode dependent on the setting of the operation mode switch by the vehicle occupant.

The vehicle occupant does hence not need to look at the operation mode switch but can intuitively use touch and feel the operation mode switch for setting the operation mode to the first operation mode or the second operation mode. According to some embodiments the control switch may further be set in a non-operational mode e.g. an "off mode".

According to some embodiments, wherein the operation mode switch is a multi-selector switch configured to be set in a plurality of positions for operation of the control switch in the first operational mode and configured to be set in a plurality of positions for operation of the control switch in the second operational mode.

The vehicle occupant does hence not need to look at the operation mode switch but can intuitively use touch and feel the operation mode switch and e.g. move the operation mode switch in a certain direction to operate the operation mode switch.

According to some embodiments, wherein the operation mode switch is a pushbutton switch configured to shift between different modes for operation of the control switch in the first operational mode and configured to shift between different modes for operation of the control switch in the second operational mode dependent on a repeated actuations of the pushbutton switch.

The vehicle occupant does hence not need to look at the operation mode switch but can intuitively use touch and feel the operation mode switch and e.g. press the operation mode switch a certain number of times to operate the operation mode switch.

According to some embodiments, wherein the operation mode switch is associated with a visual indicator at the operation mode switch configured to visually signal the current operation mode to the vehicle occupant.

The vehicle occupant can then get confirmation via the visual indicator of e.g. what operational mode that is activated, or e.g. get information about what mirror or what camera to operate.

According to some embodiments, a first actuation of the at least first directional control key of the control switch after setting operation mode, is associated with a selection of the control of the camera view direction of the at least a first camera or a selection of the control of the mirror view direction of the at least first side mirror that is located in the same direction on the vehicle relative to a direction indication of the actuated at least first directional control key.

The vehicle occupant does hence not need to look at the control switch but can intuitively use touch and feel for activating control of the mirror view direction of a mirror, or a camera view direction of a camera, that is in the same direction as the directional control key of the control switch.

According to a second aspect there is provided a method for controlling the views of the surrounding of the vehicle by a vehicle occupant, the method comprising: determining an operational mode of a control switch ; controlling a camera view direction of at least a first camera by the control switch, when the control switch is in a first operational mode; and controlling a mirror view direction of at least a first side mirror by the control switch, when the control switch is in a second operational mode.

The control switch can hence be used both for controlling a camera view direction of at least a first camera in a first operational mode, and the same control switch can also be used for controlling a mirror view direction of at least first a side mirror in a second operational mode. This operation is intuitive for the vehicle occupant that is controlling the views of the surroundings of the vehicle.

According to some embodiments, the control of the camera view direction or the control of the mirror view direction by the control switch comprises actuating at least a first directional control key of the control switch by a vehicle occupant.

The same directional control key of the control switch can hence be used both for controlling a camera view direction of the at least first camera in a first operational mode, and the same control switch can also be used for controlling a mirror view direction of the at least first side mirror in a second operational mode. This operation is intuitive for the vehicle occupant that is controlling the views of the surroundings of the vehicle.

According to some embodiments, the method further comprises: determining a press-and-hold actuation of at least a first directional control key of the control switch ; determining a release of actuation of the at least first directional control key of the control switch ; and in a determination that the press-and-hold actuation of the at least first directional control key of the control switch is followed by the release of actuation of the at least first directional control key at a first predetermined time interval, setting the control switch in the first operational mode; and in a determination that the press-and-hold actuation of the at least first directional control key of the control switch is followed by the release of actuation of the at least first directional control key at a second predetermined time interval different from the first predetermined time interval, setting the control switch in the second operational mode.

The same directional control key of the control switch can hence be used both for setting the control switch in the first operational mode, activating control of the camera view direction, when the directional control key is pressed and hold a certain amount of time, e.g. less than two seconds. The same directional control key of the control switch can also be used for setting the control switch in the second operational mode, for activating control of the mirror view direction, when the directional control key is pressed and hold a different amount of time, e.g. more than two seconds. The vehicle occupant does hence not need to look at the control switch but can intuitively use touch and feel for activating control of the mirror view direction and for activating control of the camera view direction.

According to some embodiments, the method further comprises: controlling any of the camera view direction of the at least a first camera or controlling the mirror view direction of the at least first side mirror that is located in the same direction on the vehicle relative to a direction indication of the actuated at least first directional control key that was used for setting the operational mode, by further actuations of any directional control key of the control switch by the vehicle occupant.

The vehicle occupant does hence not need to look at the control switch but can intuitively use touch and feel for activating control of the mirror view direction of a mirror, or a camera view direction of a camera, that is in the same direction as the directional control key of the control switch.

According to some embodiments, the method further comprises: determining an actuation of an operation mode switch by the vehicle occupant; and setting the control switch in a first operational mode or in a second operational mode dependent on the setting of the operation mode switch by the vehicle occupant.

The vehicle occupant does hence not need to look at the operation mode switch but can intuitively use touch and feel the operation mode switch for setting the operation mode to the first operation mode or the second operation mode. According to some embodiments the control switch may further be set in a non-operational mode e.g. an "off mode".

According to a third aspect there is provided a computer program product comprising a non-transitory computer readable medium, having thereon a computer program comprising program instructions, the computer program being loadable into a processing circuitry and configured to cause execution of the method when the computer program is run by the at least one processing circuitry.

Effects and features of the second and third aspects are to a large extent analogous to those described above in connection with the first aspect. Embodiments mentioned in relation to the first aspect are largely compatible with the second and third aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 illustrates an overview of the control system.
Figures 2a and 2b illustrates examples of a control switch with at least a first directional control key according to some embodiments.
Figures 3a-3c illustrates examples of an operation mode switch according to some embodiments.
Figure 4a and 4b illustrates examples of a visual indicator according to some embodiments.
Figure 5a and 5b illustrates examples of first and second predetermined time intervals according to some embodiments.
Figure 6 illustrates a flow chart of the method steps according to the second aspect of the disclosure.
Figure 7 illustrates a computer program product according to the third aspect of the disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

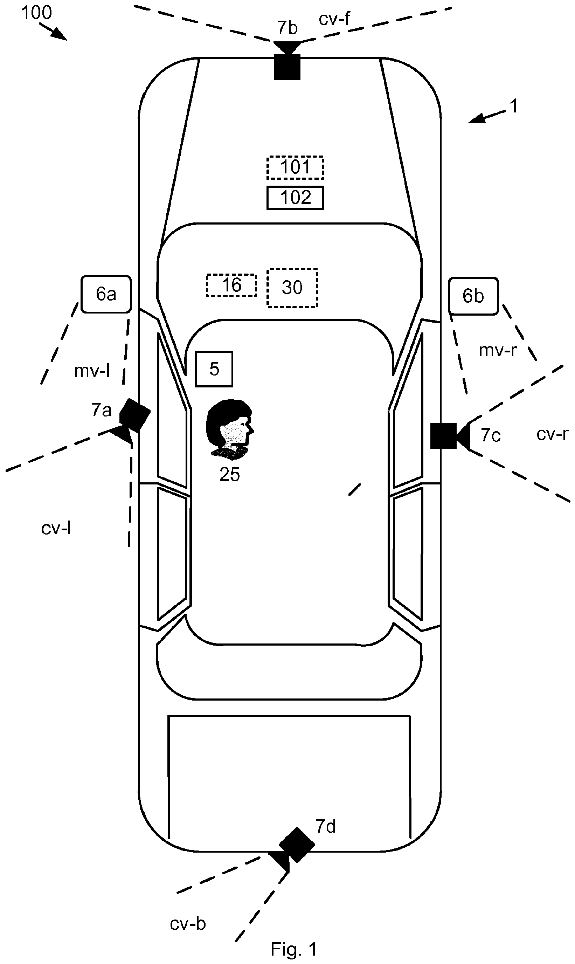

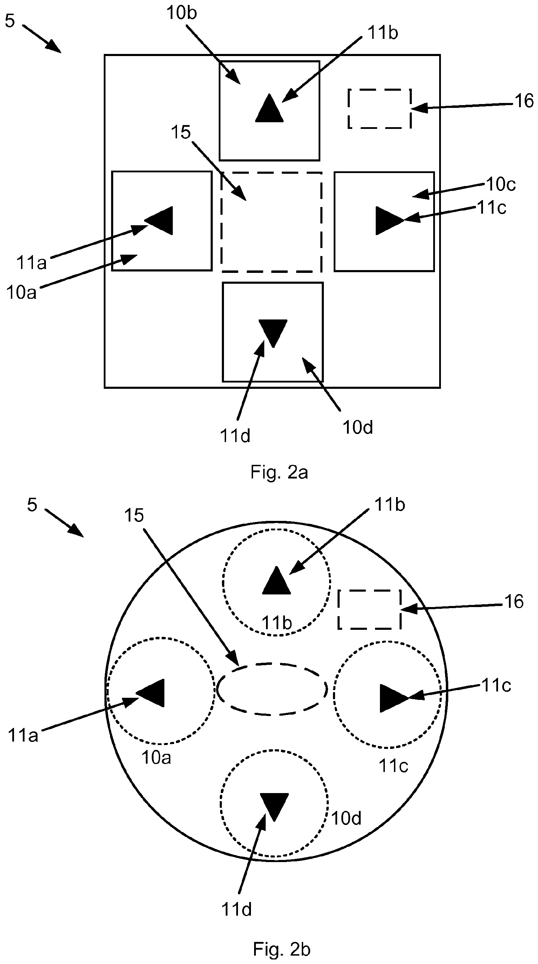

Figure 1 illustrates an overview of the control system 100. The first aspect of this disclosure shows a control system 100 at a vehicle 1 for controlling the views of the surroundings of the vehicle 1 by a vehicle occupant. The control system 100 comprises a control switch 5 comprising at least a first directional control key 10a,10b,10c,10d. Figures 2a and 2b illustrates examples of the control switch 5 with at least a first directional control key 10a,10b,10c,10d according to some embodiments. According to some embodiments the control switch 5 is arranged within a predefined distance from the seat location where the vehicle occupant 25 is placed when the vehicle occupant 25 is operating the vehicle 1. According to some embodiments the control switch 5 is arranged at a vehicle door that is adjacent to the vehicle occupant 25 when the vehicle occupant 25 is operating the vehicle 1. Typically the predefined distance is within an arm length of the vehicle occupant 25 when the vehicle occupant 25 is operating the vehicle 1. According to some embodiments the control switch 5 is designed to be operated by the vehicle occupant 25 without a need to look at the control switch 5. According to some embodiments the at least first directional control key 10a,10b,10c,10d of the control switch 5 is configured to be sensed by the vehicle occupant 25 when the vehicle occupant use touch and feel the control switch 5 for sensing the at least first directional control key 10a,10b,10c,10d. According to some embodiments the at least first directional control key 10a,10b,10c,10d of the control switch 5 is designed with a protruding element or a concave cavity so that the vehicle occupant 25 can operate the at least first directional control key 10a,10b,10c,10d without the need to look at the at least first directional control key 10a,10b,10c,10d of the control switch 5. According to some embodiments the at least first directional control key 10a,10b,10c,10d is a physical hardware key. In an example the control switch 5 as illustrated in Figure 2a comprising directional control keys 10a,10b,10c,10d each with a protruding element. According to some embodiments the at least first directional control key 10a,10b,10c,10d is a touch sensitive surface key. In an example the control switch 5 as illustrated in Figure 2b comprising a touch sensitive surface and the at least first directional control key 10a,10b,10c,10d of the control switch 5 is sensitive for e.g. a finger that is resting the at least first directional control key 10a,10b,10c,10d.

The control system 100 comprises at least a first side mirror 6a,6b configured to obtain at least a first mirror view mv-l,mv-r of the surroundings of the vehicle 1. Figure 1 illustrates example side mirrors 6a,6b, one arranged at the left side of the vehicle 1, illustrated as 6a, and one arranged at the right side of the vehicle 1, illustrated as 6b. As further illustrated in Figure 1, the at least first side mirror 6a,6b is configured to obtain at least a first mirror view mv-l,mv-r of the surroundings of the vehicle 1. The at least a first mirror view mv-l,mv-r is dependent on the direction of the least a first side mirror 6a,6b in relation to the vehicle occupant 25. In the example in Figure 1, the side mirror on the left side 6a, obtains a mirror view mv-l that is a left-rear view of what is on the left side and behind the vehicle 1 on the left side. According to some embodiments the at least first side mirror 6a,6b is configured to be adjusted in at least a first direction for obtaining at least a first mirror view mv-l,mv-r of the surroundings of the vehicle 1. According to some embodiments the at least first side mirror 6a,6b is configured to be adjusted by a mirror control device configured to be controlled by the vehicle occupant 25 via the control switch (5), and move the at least first side mirror 6a,6b in at least a first direction for obtaining at least a first mirror view mv-l,mv-r of the surroundings of the vehicle 1. According to some embodiments the mirror control device is at least any of an electric motor, a pneumatic device, an electromechanical device or a memory metal device configured to move the at least first side mirror 6a,6b in at least a first direction.

The control system 100 comprises at least a first camera 7a,7b,7c,7d configured to obtain at least a first camera view cv-l,cv-r,cv-f,cv-b of the surroundings of the vehicle 1. Figure 1 illustrates example cameras 7a,7b,7c,7d, where one is arranged at the left side of the vehicle 1, illustrated as 7a, one is arranged at the front of the vehicle 1, illustrated as 7b, one is arranged at the right side of the vehicle 1, illustrated as 7c and one is arranged at the rear of the vehicle 1, illustrated as 7d. As further illustrated in Figure 1, the at least first camera 7a,7b,7c,7 is configured to obtain at least a first camera view cv-l,cv-r,cv-f,cv-b of the surroundings of the vehicle 1. According to some embodiments the control system 100 further comprises at least a first display 30 configured to display the at least first camera view cv-l,cv-r,cv-f,cv-b of the surroundings of the vehicle 1 to the vehicle occupant 25. According to some embodiments the at least first display 30 is a part of the control system 100. According to some embodiments the at least first display 30 is integrated in the dashboard of the vehicle 1. According to some embodiments the at least first display 30 is a head-up display that is visible at or on at least a first window of the vehicle 1. According to some embodiments the at least first display 30 is a separate display unit that can be placed at a desired location in the vehicle 1. According to some embodiments the at least a first display 30 is a touch sensible display configured to operate as a user interface.

The at least a first camera view cv-l,cv-r,cv-f,cv-b is dependent on the direction of the least a first camera 7a,7b,7c,7d. In the example in Figure 1, the camera on the left side 7a, obtains a camera view cv-l that is a left-rear view of what is on the left side and behind the vehicle 1 on the left side. According to some embodiments the at least first side camera 7a,7b,7c,7d is configured to be adjusted in at least a first direction for obtaining the at least first camera view cv-l,cv-r,cv-f,cv-b of the surroundings of the vehicle 1. According to some embodiments the at least first camera 7a,7b,7c,7d is configured to be adjusted by a camera control device configured to be controlled by the vehicle occupant 25 via the control switch (5), and move the at least first camera 7a,7b,7c,7d in at least a first direction for obtaining at least a first camera view cv-l,cv-r,cv-f,cv-b of the surroundings of the vehicle 1. According to some embodiments the camera control device is at least any of an electric motor, a pneumatic device, an electromechanical device or a memory metal device configured to move the at least first camera 7a,7b,7c,7d in at least a first direction. In the example as in the illustration in Figure 1, the camera on the right side 7c is adjusted to obtain a camera view cv-r of what is on the right side of the vehicle 1. Further, the camera on the rear of the vehicle 7d is adjusted to obtain a camera view cv-b of what is on the left side, and left rear side of the vehicle 1.

The control system 100 comprises a processing circuitry 102. According to some embodiments the processing circuitry 102 is the processing circuitry of an on-board vehicle computer. According to some embodiments the control system 100 further comprises a memory 101 configured to store data. According to some embodiments the memory 101 is the memory of an on-board vehicle computer. According to an aspect the memory 101 is configured to store data associated with control of the at least first camera 7a,7b,7c,7d and/or the at least first side mirror 6a,6b. According to some embodiments data associated with control of the at least first camera 7a,7b,7c,7d and/or the at least first side mirror 6a,6b is associated with a user profile of a certain vehicle occupant.

According to some embodiments the processing circuitry 102 is operatively connected to the control switch 5, the at least first side mirror 6a,6b and the at least first camera 7a,7b,7c,7d, configured to cause the system 100 to: determine an operational mode of the control switch 5; control a camera view direction of the at least first camera 7a,7b,7c,7d by the control switch 5, when the control switch 5 is in a first operational mode; and control a mirror view direction of the at least first side mirror 6a,6b by the control switch 5, when the control switch 5 is in a second operational mode.

The control switch 5 can hence be used both for controlling the camera view cv-l, cv-r, cv-f, cv-b direction of at least the at least first camera 7a, 7b, 7c, 7d in a first operational mode, and the same control switch 5 can also be used for controlling a mirror view mv-l, mv-r direction of the at least first side mirror 6a,6b in a second operational mode. This operation is intuitive for the vehicle occupant 25 that is controlling the views of the surroundings of the vehicle. Another advantage is that when the same control switch 5 can be used for both controlling the camera view cv-l, cv-r, cv-f, cv-b directions, and the mirror view mv-l, mv-r directions is that only one hardware is needed instead of two different control switches. Only using one control switch 5 may save material, space, installation time and minimize maintenance compare to using two control switches. A further advantage is that the vehicle occupant 25 may in a comfortable and intuitive way, during a certain time period, adjust both the at least first camera 7a,7b,7c,7d and the least first side mirror 6a, 6b in order to obtain different and/or overlapping views of the surroundings of the vehicle 1. While operating the same control switch 5 in the first and the second operational mode, the vehicle occupant 25 can intuitively compare the mirror views mv-l, mv-r and the camera views cv-l, cv-r, cv-f, cv-b, while adjusting both the at least first camera 7a,7b,7c,7d and the least first side mirror 6a, 6b to e.g. avoid a dead angle or a hidden view. This adjustment can hence be carried out without the need to shift focus from one control switch to another control input, e.g. avoiding using one physical hardware switch for controlling the side mirrors and using another input, e.g. a touch sensitive display located at another location inside of the vehicle, for controlling the cameras 7a,7b,7c,7d.

According to some embodiments the control of the camera view direction or the control of the mirror view direction by the control switch 5 comprises an actuation of the at least first directional control key 10a,10b,10c,10d of the control switch 5 by the vehicle occupant.

The same directional control key 10a,10b,10c,10d of the control switch 5 can hence be used both for controlling a camera view direction of the at least first camera 7a,7b,7c,7d in a first operational mode, and the same control switch 5 can also be used for controlling a mirror view direction of the at least first side mirror 6a,6b in a second operational mode. This operation is intuitive for the vehicle occupant 25 that is controlling the views of the surroundings of the vehicle.

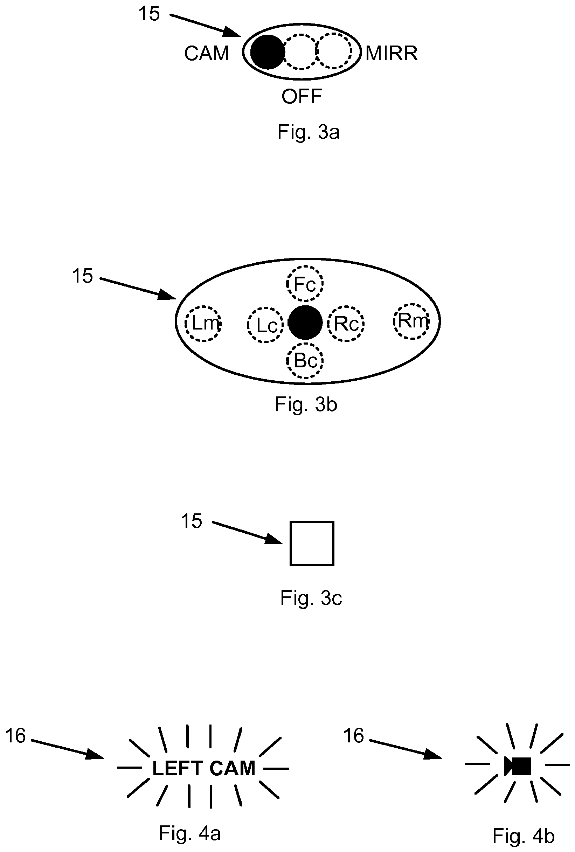

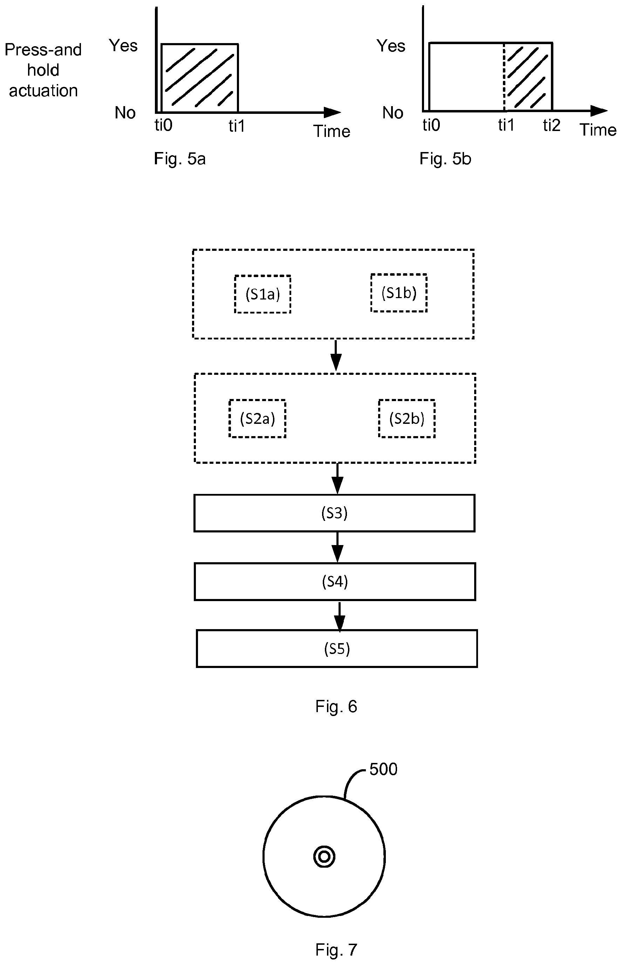

According to some embodiments the processing circuitry 102 is further configured to cause the control system 100 to: determine a press-and-hold actuation of the at least first directional control key 10a,10b,10c,10d of the control switch 5; determine a release of actuation of the at least first directional control key 10a,10b,10c,10d of the control switch 5; and in a determination that the press-and-hold actuation of the at least first directional control key 10a,10b,10c,10d is followed by the release of actuation of the at least first directional control key 10a,10b,10c,10d at a first predetermined time interval ti1, set the control switch 5 in the first operational mode; and in a determination that the press-and-hold actuation of the at least first directional control key 10a,10b,10c,10d is followed by the release of actuation of the at least first directional control key 10a,10b,10c,10d at a second predetermined time interval ti2 different from the first predetermined time interval ti1, set the control switch 5 in the second operational mode. Figure 5a and 5b illustrates examples of first and second predetermined time intervals according to some embodiments. Figure 5a illustrates a graph where a press-and-hold actuation initiated at time t0, and the press-and-hold actuation is released at a first predetermined time interval ti1. Figure 5b illustrates a graph where a press-and-hold actuation initiated at time t0, and the press-and-hold actuation is released at a second predetermined time interval ti2. According to some embodiments the setting of the control switch 5 in a first respectively second operational mode is confirmed to the vehicle occupant 25 via at least one of a tactile feedback, a visual feedback and a sound feedback. In an example the visual feedback of the first operational mode is visualized by display of a camera icon that is lit as illustrated in Figure 4b.

The same directional control key 10a, 10b, 10c, 10d of the control switch 5 can hence be used both for setting the control switch 5 in the first operational mode, activating control of the camera view direction, when the directional control key 10a, 10b, 10c, 10d is pressed and hold a certain amount of time, e.g. less than two seconds. The same directional control key 10a, 10b, 10c, 10d of the control switch 5 can also be used for setting the control switch 5 in the second operational mode, for activating control of the mirror view direction, when the directional control key 10a, 10b, 10c, 10d is pressed and hold a different amount of time, e.g. more than two seconds. The vehicle occupant 25 does hence not need to look at the control switch 5 but can intuitively use touch and feel for activating control of the mirror view direction and for activating control of the camera view direction.

According to some embodiments the processing circuitry 102 is further configured to, cause the control system 100 to: control any of the camera view direction of the at least a first camera 7a,7b,7c,7d or control the mirror view direction of the at least first side mirror 6a,6b that is located in the same direction on the vehicle 1 relative to a direction indication 11a,11b,11c,11d of the actuated at least first directional control key 10a,10b,10c,10d used for setting the operational mode, by further actuations of any directional control key 10a,10b,10c,10d of the control switch 5 by the vehicle occupant.

The vehicle occupant 25 does hence not need to look at the control switch 5 but can intuitively use touch and feel for activating control of the mirror view direction of a mirror, or a camera view direction of a camera, that is in the same direction as the directional control key of the control switch. In an example, the control switch 5 in Figure 1, has the form as the example control switch 5 as illustrated in Figure 2a. In the example, when the vehicle occupant 25 press-and-hold the directional control key 10a, the camera 7a or the side mirror 6a is to be controlled and dependent on how long the vehicle occupant press-and-hold the directional control key 10a the control switch 5 is set in either the first operational mode or in the second operational mode. In a use case, the vehicle occupant 25 desires to control the camera view direction of the camera 7b in front of the vehicle. The vehicle occupant 25 then press-and-hold the directional control key 10b for one second for setting the control switch 5 in the first operational mode. When the control switch 5 is set in the first operational mode the camera 7b in front of the vehicle 1 is selected as the camera to be controlled since the vehicle occupant 25 used the directional control key 10b of the control switch 5 when setting the control switch 5 in the first operational mode. The vehicle operator can then hence start to adjust the camera 7b in front of the vehicle 1 by using any of the directional control keys 10a, 10b, 10c, 10d for adjusting the camera view direction of camera 7b in front of the vehicle 1.

According to some embodiments the control system 100 further comprises an operation mode switch 15 operatively connected to the processing circuitry 102 configured to set the operational mode of the control switch 5, wherein the processing circuitry 102 is further configured to cause the control system 100 to: determine an actuation of the operation mode switch 15 by the vehicle occupant 1; and set the control switch 5 in a first operational mode or in a second operational mode dependent on the setting of the operation mode switch 15 by the vehicle occupant. Figures 2a and 2b illustrates example locations of the operation mode switch 15 at the control switch 5. In an example the operation mode switch 15 is located in the vicinity of the at least first directional control key 10a, 10b, 10c, 10d for easy access of the operation mode switch 15 by the vehicle occupant 25.

The vehicle occupant 25 does hence not need to look at the operation mode switch 15 but can intuitively use touch and feel the operation mode switch 15 for setting the operation mode to the first operational mode or the second operational mode. According to some embodiments the control switch 5 may further be set in a non-operational mode e.g. an "off mode".

According to some embodiments the operation mode switch 15 is a multi-selector switch configured to be set in a plurality of positions for operation of the control switch 5 in the first operational mode Lc,Rc,Fc,Bc and configured to be set in a plurality of positions for operation of the control switch 5 in the second operational mode Lm,Rm. The Figures 3a and 3b illustrates an operation mode switch 15 that is a multi-selector switch configured to be set in a plurality of positions. The example operation mode switch 15 in Figure 3a can be set in a first operational mode, a second operational mode or in an "off mode" when the operation mode switch 15 is not in any of the first or second operational mode. The example operation mode switch 15 in Figure 3b is configured with four positions, Lc,Rc,Fc,Bc when the control switch 5 is set in the first operational mode for controlling any of the cameras 7a, 7b, 7c, 7d. The example operation mode switch 15 in Figure 3b is further configured with two positions, Lm, Rm when the control switch 5 is set in the second operational mode for controlling any of the side mirrors 6a,6b. According to some embodiments the operation mode switch 15 comprising a plurality of buttons Lc,Rc,Fc,Bc,Lm,Rm configured to be activated one at the time.

The vehicle occupant does hence not need to look at the operation mode switch 15 but can intuitively use touch and feel the operation mode switch 15 and e.g. move the operation mode switch 15 in a certain direction to operate the operation mode switch 15.

According to some embodiments the operation mode switch 15 is a pushbutton switch configured to shift between different modes for operation of the control switch 5 in the first operational mode Lc,Rc,Fc,Bc and configured to shift between different modes for operation of the control switch 5 in the second operational mode Lm,Rm dependent on a repeated actuations of the pushbutton switch. Figure 3c illustrates an operation mode switch 15 that is a pushbutton switch.

The vehicle occupant does hence not need to look at the operation mode switch 15 but can intuitively use touch and feel the operation mode switch 15 and e.g. press the operation mode switch 15 a certain number of times to operate the operation mode switch.

According to some embodiments the operation mode switch 15 is associated with a visual indicator 16 at the operation mode switch 15 configured to visually signal the current operation mode to the vehicle occupant. In the examples as illustrated in Figures 2a and 2b the visual indicator 16 is located at the operation mode switch 15. According to some embodiments the operation mode switch 15 is associated with a visual indicator 16 at a vehicle dashboard configured to visually signal the current operation mode to the vehicle occupant. Figure 1 illustrates the visual indicator 16 at the vehicle dashboard. Example visual indicators are illustrated in Figures 4a and 4b. The visual indicator 16 may further illustrate which camera, e.g. the camera on the left side of the vehicle 1 as illustrated in the Figure 4b in addition to the visually signal the current operation mode. According to some embodiments the operation mode switch 15 is associated with a visual indicator at the at least first display 30 configured to visually signal the current operation mode to the vehicle occupant

The vehicle occupant can then get confirmation via the visual indicator of e.g. what operational mode that is activated, or e.g. get information about what side mirror 6a,6b or what camera 7a, 7b, 7c, 7d to operate without looking at the operation mode switch 15.

According to some embodiments a first actuation of the at least first directional control key 10a,10b,10c,10d of the control switch 5 after setting operation mode, is associated with a selection of the control of the camera view direction of the at least a first camera 7a,7b,7c,7d or a selection of the control of the mirror view direction of the at least first side mirror 6a,6b that is located in the same direction on the vehicle 1 relative to a direction indication 11a,11b,11c,11d of the actuated at least first directional control key 10a,10b,10c,10d. In an example the operation mode switch 15 as illustrated in Figure 3a is first set to the first operational mode for controlling of the camera view direction of the at least a first camera 7a,7b,7c,7d, and the first actuation on the at least first directional control key 10a,10b,10c,10d is e.g. the directional control key 10a which then associated with a selection of the control of the camera view direction of the camera 7a that is in the same direction on the vehicle 1 relative to a direction indication 11a.

The vehicle occupant 25 does hence not need to look at the control switch 5 but can intuitively use touch and feel for activating control of the mirror view direction of a side mirror 6a,6b, or a camera view direction of a camera 7a,7b,7c,7d, that is in the same direction as the directional control key 10a,10b,10c,10d of the control switch 5.

The second aspect of this disclosure shows a method for controlling the views of the surrounding of the vehicle 1 by a vehicle occupant. Figure 6 illustrates a flow chart of the method steps according to the second aspect of the disclosure. The method comprising: the step of S3 determining an operational mode of a control switch 5; the step of S4 controlling a camera view direction of at least a first camera 7a,7b,7c,7d by the control switch 5, when the control switch 5 is in a first operational mode; and the step of S5 controlling a mirror view direction of at least a first side mirror 6a,6b by the control switch 5, when the control switch 5 is in a second operational mode.

The control switch 5 can hence be used both for controlling a camera view direction of at least a first camera 7a,7b,7c,7d in a first operational mode, and the same control switch 5 can also be used for controlling a mirror view direction of at least first a side mirror 6a,6b in a second operational mode. This operation is intuitive for the vehicle occupant 25 that is controlling the views of the surroundings of the vehicle 1.

According to some embodiments the control of the camera view direction or the control of the mirror view direction by the control switch 5 comprises actuating at least a first directional control key 10a,10b,10c,10d of the control switch 5 by a vehicle occupant.

The same directional control key 10a,10b,10c,10d of the control switch 5 can hence be used both for controlling a camera view direction of the at least first camera7a,7b,7c,7d in a first operational mode, and the same control switch 5 can also be used for controlling a mirror view direction of the at least first side mirror 6a,6b in a second operational mode. This operation is intuitive for the vehicle occupant 25 that is controlling the views of the surroundings of the vehicle 1.

According to some embodiments the method further comprises: the step of S1a determining a press-and-hold actuation of at least a first directional control key 10a,10b,10c,10d of the control switch 5; : the step of S2a determining a release of actuation of the at least first directional control key 10a,10b,10c,10d of the control switch 5; and in a determination that the press-and-hold actuation of the at least first directional control key 10a,10b,10c,10d of the control switch 5 is followed by the release of actuation of the at least first directional control key 10a,10b,10c,10d at a first predetermined time interval ti1, setting the control switch 5 in the first operational mode; and in a determination that the press-and-hold actuation of the at least first directional control key 10a,10b,10c,10d of the control switch 5 is followed by the release of actuation of the at least first directional control key 10a,10b,10c,10d at a second predetermined time interval ti2 different from the first predetermined time interval ti1, setting the control switch 5 in the second operational mode.

The same directional control key 10a,10b,10c,10d of the control switch 5 can hence be used both for setting the control switch 5 in the first operational mode, activating control of the camera view direction, when the directional control key is pressed and hold a certain amount of time, e.g. less than two seconds. The same directional control key 10a,10b,10c,10d of the control switch 5 can also be used for setting the control switch 5 in the second operational mode, for activating control of the mirror view direction, when the directional control key 10a,10b,10c,10d is pressed and hold a different amount of time, e.g. more than two seconds. The vehicle occupant 25 does hence not need to look at the control switch 5 but can intuitively use touch and feel for activating control of the mirror view direction and for activating control of the camera view direction.

According to some embodiments the method further comprises: controlling any of the camera view direction of the at least a first camera 7a,7b,7c,7d or controlling the mirror view direction of the at least first side mirror 6a,6b that is located in the same direction on the vehicle 1 relative to a direction indication 11a,11b,11c,11d of the actuated at least first directional control key 10a,10b,10c,10d that was used for setting the operational mode, by further actuations of any directional control key 10a,10b,10c,10d of the control switch 5 by the vehicle occupant.

The vehicle occupant 25 does hence not need to look at the control switch 5 but can intuitively use touch and feel for activating control of the mirror view direction of a side mirror 6a,6b or a camera view direction of a camera 7a,7b,7c,7d, that is in the same direction as the directional control key 10a,10b,10c,10d of the control switch 5.

According to some embodiments the method further comprises: the step of S1b determining an actuation of an operation mode switch 15 by the vehicle occupant 1; and the step of S2b setting the control switch 5 in a first operational mode or in a second operational mode dependent on the setting of the operation mode switch 15 by the vehicle occupant.

The vehicle occupant 25 does hence not need to look at the operation mode switch 15 but can intuitively use touch and feel the operation mode switch 15 for setting the operation mode to the first operation mode or the second operation mode. According to some embodiments the operation mode switch 15 may further be set in a non-operational mode e.g. an "off mode".

The third aspect of this disclosure shows a computer program product the second aspect comprising a non-transitory computer readable medium, having thereon a computer program comprising program instructions, the computer program being loadable into a processing circuitry 102 and configured to cause execution of the method when the computer program is run by the at least one processing circuitry 102.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. A control system (100) at a vehicle (1) for controlling the views of the surroundings of the vehicle (1) by a vehicle occupant, the control system (100) comprises:
a control switch (5) comprising at least a first directional control key (10a,10b,10c,10d);
at least a first side mirror (6a,6b) configured to obtain at least a first mirror view (mv-l,mv-r) of the surroundings of the vehicle (1);
at least a first camera (7a,7b,7c,7d) configured to obtain at least a first camera view (cv-l,cv-r,cv-f,cv-b) of the surroundings of the vehicle (1); and
a processing circuitry (102) operatively connected to the control switch (5), the at least first side mirror (6a,6b) and the at least first camera (7a,7b,7c,7d) configured to cause the system (100) to:
determine an operational mode of the control switch (5);
control a camera view direction of the at least first camera (7a,7b,7c,7d) by the control switch (5), when the control switch (5) is in a first operational mode; and
control a mirror view direction of the at least first side mirror (6a,6b) by the control switch (5), when the control switch (5) is in a second operational mode.

2. The control system (100) according to claim 1, wherein the control of the camera view direction or the control of the mirror view direction by the control switch (5) comprises an actuation of the at least first directional control key (10a,10b,10c,10d) of the control switch (5) by the vehicle occupant.

3. The control system (100) according to any of the preceding claims, wherein the processing circuitry (102) is further configured to cause the control system (100) to:
determine a press-and-hold actuation of the at least first directional control key (10a,10b,10c,10d) of the control switch (5);
determine a release of actuation of the at least first directional control key (10a,10b,10c,10d) of the control switch (5); and
in a determination that the press-and-hold actuation of the at least first directional control key (10a,10b,10c,10d) is followed by the release of actuation of the at least first directional control key (10a,10b,10c,10d) at a first predetermined time interval (ti1), set the control switch (5) in the first operational mode; and
in a determination that the press-and-hold actuation of the at least first directional control key (10a,10b,10c,10d) is followed by the release of actuation of the at least first directional control key (10a,10b,10c,10d) at a second predetermined time interval (ti2) different from the first predetermined time interval (ti1), set the control switch (5) in the second operational mode.

4. The control system (100) according to claim 3 wherein the processing circuitry (102) is further configured to, cause the control system (100) to:
control any of the camera view direction of the at least a first camera (7a,7b,7c,7d) or control the mirror view direction of the at least first side mirror (6a,6b) that is located in the same direction on the vehicle (1) relative to a direction indication (11a,11b,11c,11d) of the actuated at least first directional control key (10a,10b,10c,10d) used for setting the operational mode, by further actuations of any directional control key (10a,10b,10c,10d) of the control switch (5) by the vehicle occupant.

5. The control system (100) according to any of the claims 1-2, wherein the control system (100) further comprises an operation mode switch (15) operatively connected to the processing circuitry (102) configured to set the operational mode of the control switch (5) wherein the processing circuitry (102) is further configured to, cause the control system (100) to:
determine an actuation of the operation mode switch (15) by the vehicle occupant (1); and
set the control switch (5) in a first operational mode or in a second operational mode dependent on the setting of the operation mode switch (15) by the vehicle occupant.

6. The control system (100) according to claim 5 wherein the operation mode switch (15) is a multi-selector switch configured to be set in a plurality of positions for operation of the control switch (5) in the first operational mode (Lc,Rc,Fc,Bc) and configured to be set in a plurality of positions for operation of the control switch (5) in the second operational mode (Lm,Rm).

7. The control system (100) according to claim 5 wherein the operation mode switch (15) is a pushbutton switch configured to shift between different modes for operation of the control switch (5) in the first operational mode (Lc,Rc,Fc,Bc) and configured to shift between different modes for operation of the control switch (5) in the second operational mode (Lm,Rm) dependent on a repeated actuations of the pushbutton switch.

8. The control system (100) according to any of the claims 5-7 wherein the operation mode switch (15) is associated with a visual indicator (16) at the operation mode switch (15) configured to visually signal the current operation mode to the vehicle occupant.

9. The control system (100) according to claims 1-3 or 5, wherein a first actuation of the at least first directional control key (10a,10b,10c,10d) of the control switch (5) after setting operation mode, is associated with a selection of the control of the camera view direction of the at least a first camera (7a,7b,7c,7d) or a selection of the control of the mirror view direction of the at least first side mirror (6a,6b) that is located in the same direction on the vehicle (1) relative to a direction indication (11a,11b,11c,11d) of the actuated at least first directional control key (10a,10b,10c,10d).

10. A method for controlling the views of the surrounding of the vehicle (1) by a vehicle occupant, the method comprising:
(S3) determining an operational mode of a control switch (5);
(S4) controlling a camera view direction of at least a first camera (7a,7b,7c,7d) by the control switch (5), when the control switch (5) is in a first operational mode; and
(S5) controlling a mirror view direction of at least a first side mirror (6a,6b) by the control switch (5), when the control switch (5) is in a second operational mode.

11. The method according to claim 10, wherein the control of the camera view direction or the control of the mirror view direction by the control switch (5) comprising actuating at least a first directional control key (10a,10b,10c,10d) of the control switch (5) by a vehicle occupant.

12. The method according to any of the claims 10-11, the method further comprising:
(S1a) determining a press-and-hold actuation of at least a first directional control key (10a,10b,10c,10d) of the control switch (5);
(S2a) determining a release of actuation of the at least first directional control key (10a,10b,10c,10d) of the control switch (5);
and in a determination that the press-and-hold actuation of the at least first directional control key (10a,10b,10c,10d) of the control switch (5) is followed by the release of actuation of the at least first directional control key (10a,10b,10c,10d) at a first predetermined time interval (ti1), setting the control switch (5) in the first operational mode;
and in a determination that the press-and-hold actuation of the at least first directional control key (10a,10b,10c,10d) of the control switch (5) is followed by the release of actuation of the at least first directional control key (10a,10b,10c,10d) at a second predetermined time interval (ti2) different from the first predetermined time interval (ti1), setting the control switch (5) in the second operational mode.

13. The method according to claim 12, the method further comprising: controlling any of the camera view direction of the at least a first camera (7a,7b,7c,7d) or controlling the mirror view direction of the at least first side mirror (6a,6b) that is located in the same direction on the vehicle (1) relative to a direction indication (11a,11b,11c,11d) of the actuated at least first directional control key (10a,10b,10c,10d) that was used for setting the operational mode, by further actuations of any directional control key (10a,10b,10c,10d) of the control switch (5) by the vehicle occupant.

14. The method according to any of the claims 10-11, the method further comprising:
(S1b) determining an actuation of an operation mode switch (15) by the vehicle occupant (1); and
(S2b) setting the control switch (5) in a first operational mode or in a second operational mode dependent on the setting of the operation mode switch (15) by the vehicle occupant.

15. A computer program product (500) comprising a non-transitory computer readable medium, having thereon a computer program comprising program instructions, the computer program being loadable into a processing circuitry (102) and configured to cause execution of the method according to any of claims 10 through 14 when the computer program is run by the at least one processing circuitry (102).
